# FASCICULE DE BREVET EUROPEEN

(11) **EP 0 665 123 B1**
(45) Date de publication et mention de la délivrance du brevet: **18.03.1998**
(21) Numéro de dépôt: 95400201.0
(22) Date de dépôt: 31.01.1995
(51) Int. Cl.: B42D 15/08, B65D 27/08, G03D 15/00

(54) **Ensemble destiné à fabriquer une série de pochettes individuelles**
Herstellungskombination für eine Serie von Indivisualtaschen
Combination for producing series of individual pockets

(30) Priorité: 01.02.1994 FR 9401083
(43) Date de publication de la demande: 02.08.1995
(73) Titulaire: MOORE BUSINESS FORMS, INC., Grand Island New York 14072-1697 (US)
(72) Inventeur: Juteau, Olivier, F-78380 Bougival (FR)
(74) Mandataire: Colas, Jean-Pierre

(56) Documents cités:
- EP-A- 0 527 588
- DE-U- 9 302 658
- US-A- 3 302 861
- US-A- 5 060 847

## Description

La présente invention est relative à un ensemble destiné à constituer une pochette destinée à contenir des objets, par exemple des pellicules photographiques, en vue de leur transport.

Des pochettes destinées à recevoir des pellicules et des tirages photographiques sont notamment décrites dans le document US-A-5,060,847.

Selon la technique actuelle, dans le domaine du développement de pellicules photographiques, un laboratoire de traitement reçoit, de son imprimeur, des pochettes scellées sur trois côtés et portant des indications relatives à un laboratoire. Il porte sur chacune de ces pochettes des inscriptions personnalisées relatives, notamment, à un photographe avec lequel il travaille, et à un numéro d'ordre, à un code barre etc.., puis les envoie à ce photographe, qui met la pellicule à développer dans la pochette puis retourne celle-ci, après l'avoir fermée, au laboratoire.

Cette manière d'opérer présente l'inconvénient que la pochette reçue par le laboratoire est apte à recevoir une impression offset, mais ne peut pas recevoir de façon satisfaisante une impression fournie par une imprimante moderne à grande vitesse, de type laser, à jet d'encre ou autre, qui imprime sur une bande défilant en continu, ou éventuellement sur une série de feuilles empilées à plat.

Les imprimantes auxquelles il est fait référence dans le présent texte, ou "imprimantes rapides" sont des imprimantes qui se distinguent par la grande vitesse d'impression, mais aussi qu'elles n'acceptent pas de façon satisfaisante des feuilles ayant subi un pliage et doivent être utilisées soit avec des bandes continues, soit avec des feuilles non pliées, empilées à plat.

La présente invention a pour but de résoudre un tel problème, et plus précisément, de fournir un ensemble destiné à constituer des pochettes qui portent, d'une part, des informations communes, relatives à un premier utilisateur, et, d'autre part, des informations personnalisées relatives à un second utilisateur, ces informations personnalisées ayant été portées sur la matière de la pochette par passage dans une imprimante à grande vitesse.

Pour obtenir ce résultat, l'invention fournit un ensemble destiné à être utilisé pour fabriquer une série de pochettes individuelles, cet ensemble étant constitué de feuilles individuelles destinées chacune à être formée en une pochette individuelle, chaque feuille étant limitée par deux bords transversaux et un premier et un second bords longitudinaux,
chacune desdites feuilles étant divisée en un premier, un second et un troisième panneaux par deux lignes de pliage transversales, lesdits premier et troisième panneaux étant adjacents à un bord transversal, et la longueur du second panneau étant plus petite que la somme des longueurs du premier et troisième panneaux, mais plus grande que la longueur d'au moins le troisième panneau,
chaque feuille ayant une face avant qui est imprimée avec de l'information relative à un premier utilisateur et des espaces aptes à recevoir des informations relatives à un parmi plusieurs seconds utilisateurs, ces informations devant être portées par le premier utilisateur, et une face arrière qui porte des motifs de colle réactivable,
le premier panneau de chaque feuille étant pourvu, sur sa face arrière, d'une ligne de colle réactivable courant le long de la ligne de séparation, grâce à laquelle il peut être collé sur la face avant du troisième panneau, après que la feuille individuelle a été séparée et pliée,
le second panneau étant pourvu, sur sa face arrière, d'une ligne de colle réactivable courant le long du premier bord longitudinal, grâce à laquelle il peut être collé sur la face arrière desdits premier et troisième panneaux après que la feuille individuelle a été pliée avec la face arrière du second panneau faisant face aux faces arrières desdits premier et troisième panneaux,
cette bande ayant pour particularité que ledit ensemble est conditionné pour être expédié au premier utilisateur sous une forme permettant son passage dans une imprimante rapide installée chez le premier utilisateur, pour y recevoir des informations relatives à un second utilisateur.

Suivant un premier type de réalisation, l'ensemble est constitué d'une bande continue dans laquelle les feuilles sont reliées entre elles par des lignes perforées transversales destinées à constituer les bords transversaux des feuilles quand celles-ci sont séparées les unes des autres, les faces avant des différentes feuilles constituant ensemble une face avant de la bande, ladite bande étant aussi prévue avec au moins une rangée de trous d'entraînement disposée le long d'un bord longitudinal de ladite bande, et ladite bande est conditionnée pour être expédiée au premier utilisateur sans que les feuilles soient séparées, si bien qu'elle peut recevoir les informations relatives à un second utilisateur par passage dans une imprimante opérant sur une bande continue.

Suivant un deuxième type de réalisation, l'ensemble est constitué de feuilles empilées à plat, si bien que chaque feuille de l'ensemble peut recevoir des informations relatives à un second utilisateur par passage dans une imprimante rapide apte à recevoir des feuilles successives.

Avantageusement, le premier ou le second panneau de chaque feuille est prévu avec un volet défini par le second bord longitudinal dudit panneau, par deux lignes de séparation transversales coupant ledit bord longitudinal, et par une ligne de pliage longitudinale qui coupe lesdites lignes transversales de perforations.

Ce volet est destiné à assurer la fermeture de la pochette après remplissage. Il peut être simplement replié à l'intérieur de la pochette soit collé sur le premier panneau par des moyens appropriés.

Suivant une réalisation préférée, celui des premier et second panneaux qui ne comporte pas le volet comprend, le long du second bord transversal, au moins un coupon détachable et le volet porte, sur sa face arrière, un motif adhésif apte à venir se fixer sur la face avant du premier panneau, après enlèvement du ou des coupons.

Le coupon est, par exemple, destiné à être séparé du sachet par le second utilisateur avant l'envoi du sachet rempli, afin d'être conservé par ce second utilisateur, par exemple pour identifier l'envoi.

De préférence, par raison de simplicité, une desdites lignes de séparation transversales définissant le volet coïncide avec une partie de l'une desdites lignes transversales définissant lesdits panneaux.

Avantageusement, le premier et/ou le second panneaux de chaque section comportent une fenêtre pourvue d'un transparent conçu pour permettre d'inspecter l'intérieur de la pochette.

L'invention fournit également un procédé de formation et d'utilisation d'une pochette destinée à transmettre un objet, ce procédé comportant les étapes de :
a) établissement chez un imprimeur d'un ensemble constitué de feuilles qui portent chacune des informations relatives à un premier utilisateur et des espaces destinés à recevoir des informations relatives à un parmi plusieurs seconds utilisateurs,
b) formation d'une pochette à partir desdites feuilles.
c) apposition, dans lesdits espaces, des informations relatives au second utilisateur, cette opération étant faite chez le premier utilisateur,
d) envoi de la pochette chez le second utilisateur,
e) mise en place d'un objet dans la pochette par le second utilisateur, et envoi de celle-ci chez le premier utilisateur ou chez un troisième utilisateur,
la particularité de ce procédé étant que l'ensemble, dans lequel chaque feuille a reçu les informations relatives au premier utilisateur, est envoyé au premier utilisateur, où elle reçoit des informations relatives à un second utilisateur, dans une imprimante rapide, après quoi la pochette est formée.

Suivant un premier mode de mise en oeuvre du procédé l'ensemble est constitué sous la forme d'une bande continue et les feuilles constituant la bande sont séparées les unes des autres après passage de la bande dans ladite imprimante rapide.

Suivant un autre mode de mise en oeuvre du procédé l'ensemble est constitué de feuilles séparées, empilées.

Comme on peut le constater, une bande continue formée des feuilles conformes à l'invention, et non détachées, ou une pile de feuilles séparées conformes à l'invention constitue un "produit intermédiaire" obtenu au cours du procédé si elles ont reçu une première impression chez l'imprimeur.

Une telle bande et une telle pile sont alors incluses dans le domaine de l'invention revendiquée.

L'invention va maintenant être décrite de façon plus détaillée à l'aide d'un exemple pratique, illustré avec les figures, parmi lesquelles :

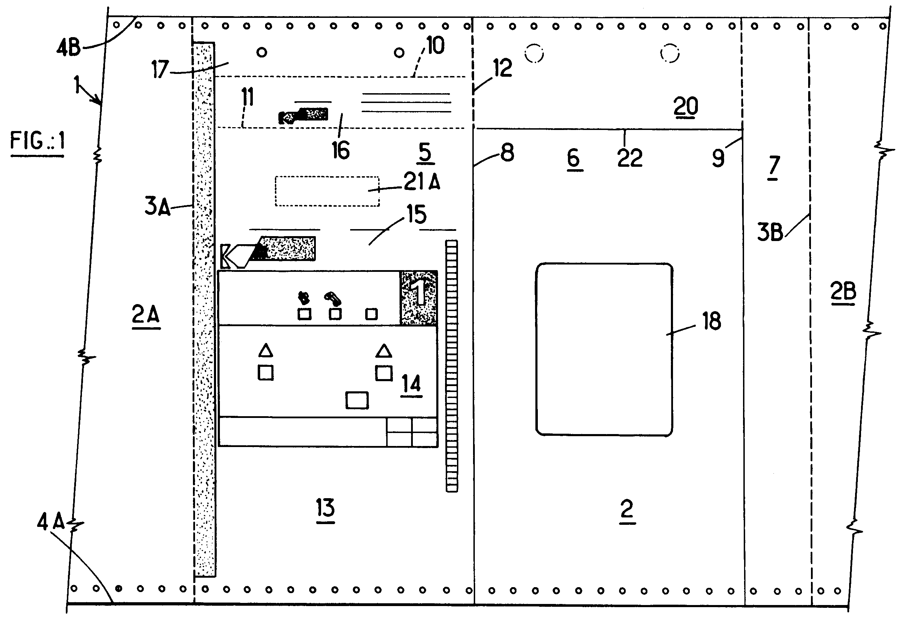

Figure 1 représente la face avant d'une partie de bande continue conforme à l'invention, et
Figure 2 une vue de la face arrière de la même bande.

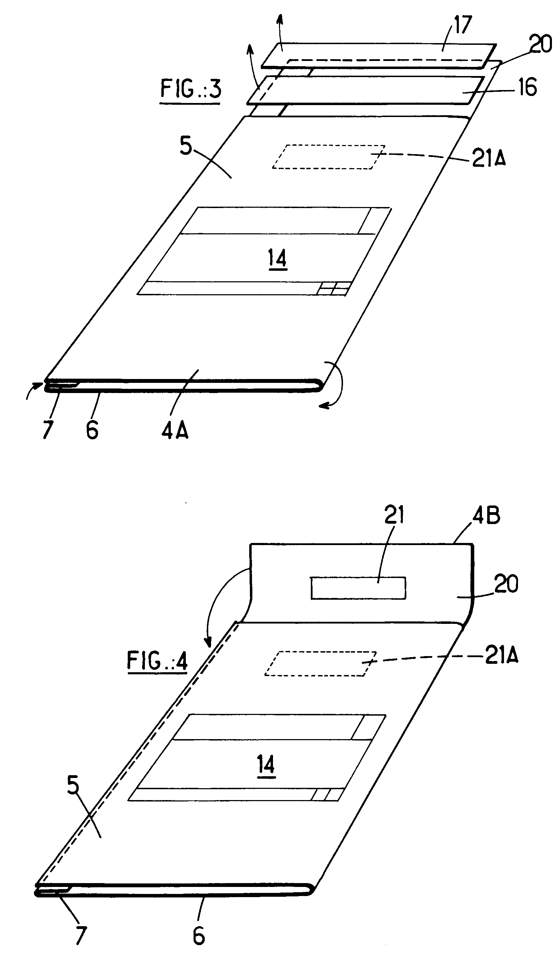

Figures 3 et 4 sont des schémas en perspective montrant des étapes de la formation d'une pochette.

La bande 1 décrite à titre d'exemple est constituée de plusieurs sections successives, dont une seule 2 est représentée en entier, des sections voisines 2A, 2B sont séparées de la section 2 par des lignes de séparation transversales 3A, 3B, formées chacune d'une série de perforations non jointives. Le long de chacun des bords longitudinaux 4A, 4B de la bande 1 sont prévues des rangées de trous d'entraînement, de type "Caroll", bien connu de l'homme de métier. Chaque tronçon 2 est divisé en trois panneaux, qui portent les références 5, 6, 7, en allant de la gauche vers la droite sur les figures. Le panneau 5 est limité par une ligne de séparation 3A et une première ligne de pliage 8. Le panneau 6 est limité par la première ligne de pliage 8 et une deuxième ligne de pliage 9, et le panneau 7 est délimité par la deuxième ligne de pliage 9 et une autre ligne de séparation 3B. Les panneaux 5 et 6 sont sensiblement de même longueur, alors que le panneau 7 est sensiblement plus petit.

Le panneau 5 présente, en outre, une première ligne de séparation longitudinale 10, située à environ 25 mm d'un de ses bords, et une deuxième ligne de séparation longitudinale 11, située à environ 25 mm de la première. Les lignes de séparation 10 et 11 s'étendent sensiblement de la ligne de séparation transversale 3A à la ligne de pliage 8. La partie 12 de la ligne de pliage 8 qui s'étend entre la ligne de séparation 11 et le bord le plus voisin de la feuille 1 est constituée, elle-même, en une ligne de séparation.

Les lignes de séparation 10 et 11 délimitent, avec les lignes de séparation 3A et 12 et le bord 4B de la feuille, des coupons détachables dont on expliquera plus loin l'utilité. On notera que ces coupons ne représentent qu'une faible partie de la surface du panneau 5, dont la largeur totale est de l'ordre de 340 mm.

Sur sa face avant, le panneau 5 porte une impression délimitant un certain nombre d'espaces distincts : un espace 13 est destiné à recevoir des annotations du laboratoire de traitement, un deuxième espace 14 est destiné à recevoir des indications sur le travail demandé par le client du photographe, un espace 15 porte des indications concernant le photographe lui-même : nom, numéro de téléphone. La zone 16 située entre les lignes de séparation 10 et 11 constitue un coupon destiné au client du photographe. La zone 17 située entre la ligne de séparation 10 et le bord le plus proche de la bande 1 constitue un coupon numéroté qui doit être conservé par le photographe.

Le panneau 6 comporte, dans sa partie centrale, une fenêtre 18, obturée par un feuillet de matière transparente 19, et qui permet de contrôler l'intérieur d'un sachet une fois qu'il a été fermé. La zone 20 de la face arrière du panneau 6 qui se trouve au voisinage des zones 16 et 17 du panneau 5 comporte un cadre 21, portant un motif auto-adhésif pourvu d'un feuillet protecteur. La zone 20 est délimitée par une ligne de pliage 22, qui prolonge sensiblement la ligne de séparation 11. Après séparation des coupons 16 et 17, et formation du sachet, la zone 20 peut être repliée autour de la ligne de pliage 22, elle vient alors recouvrir en partie le panneau 5, le motif 21 venant se coller sur un cadre 21A. Le motif 21 et le cadre 21A peuvent, bien entendu, être permutés.

La face avant du petit panneau 7 ne porte aucune impression.

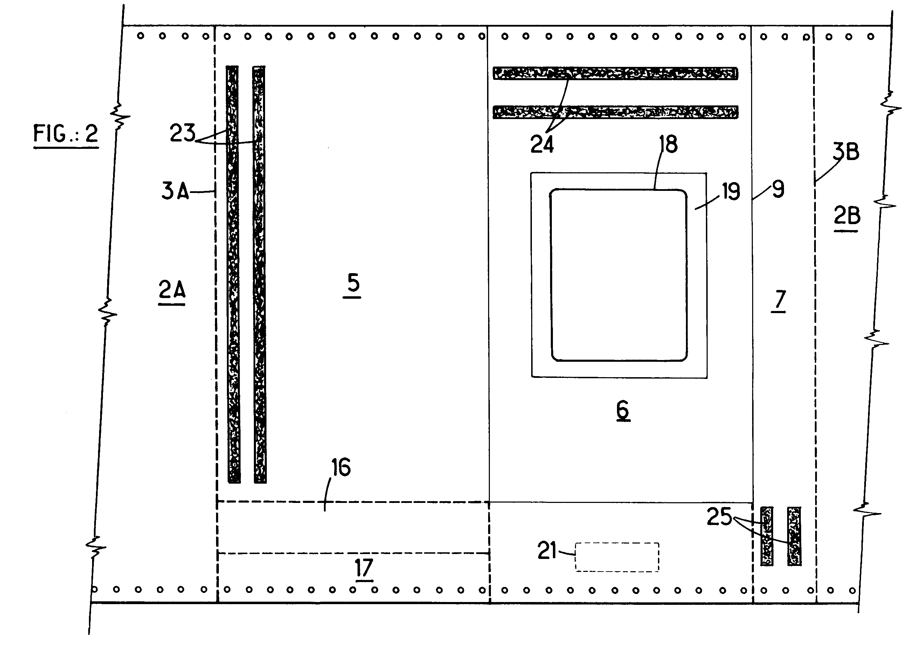

Si nous nous tournons maintenant vers la figure 2, qui représente la face arrière de la bande, nous observons, sur le panneau 5, une double ligne de colle réactivable 23, qui s'étend le long de la ligne de séparation 3A, à faible distance de celle-ci. La ligne de colle 23 ne s'étend pas sur les zones de coupon 16 et 17.

Des inscriptions destinées au client sont imprimées au verso du coupon 16, et un rappel de consigne de remplissage du sachet est imprimé dans la partie centrale du panneau 5, de façon à pouvoir être lu à travers la fenêtre 19, quand le panneau 6 est replié sur le panneau 5.

Le panneau 6, outre la fenêtre transparente 19, comporte une double ligne de colle réactivable 24, située le long du bord longitudinal 4A qui est à l'opposé des coupons 16 et 17.

La face arrière du panneau 7 porte une double ligne de colle réactivable 25, disposée transversalement, au voisinage de la ligne de pliage 9, et du côté de la bande qui correspond aux coupons 16 et 17.

On comprendra aisément la suite des opérations comprenant l'utilisation de la bande 1 :
1) une bande vierge 1 reçoit les impressions qu'on vient de décrire sur ses faces avant et éventuellement arrière. Cette impression est faite en continu au moyen d'une machine rapide.

Avant ou après cette impression, on procède à la mise en place des lignes de colle réactivable 23, 24, 25 et du motif auto-adhésif du cadre 21, avec son feuillet protecteur, ainsi qu'à la formation des lignes de séparation 3A, 3B etc.., des lignes de séparation 11 et 12, et éventuellement des lignes de pliage 8, 9 et 22. La fenêtre avec son feuillet transparent est de préférence confectionnée avant le passage dans l'imprimante.

La bande ainsi préparée est alors envoyée au laboratoire de traitement.

Celui-ci, après personnalisation en continu des pochettes, par exemple par repiquage des nom et adresse du photographe, envoie la bande dans une machine automatique, par exemple une machine "Postmatic" (marque déposée de la Société "Moore Business Forms, INC) pour transformer cette bande en une série de pochettes séparées, prêtes à l'emploi.

Le matériel "Postmatic" sépare les feuilles individuelles le long des lignes de séparation 3A, 3B, etc.. et les replie de telle façon que la face arrière du panneau 7 soit en contact avec la face arrière du panneau 6, et que la face arrière du panneau 5 recouvre la face avant du panneau 7 une fois replié, et les lignes de colle 23, 24 et 25 sont activées pour former une pochette.

Le sachet est envoyé chez le photographe. Celui-ci remplit le coupon 16, détache les coupons 16 et 17.

Ensuite, il replie la zone 20 du panneau 6 sur la face avant du panneau 5, en enlevant le feuillet protecteur du motif auto-adhésif de la zone 21 pour fermer la pochette. La pochette ainsi remplie est fermée et peut alors être réexpédiée au laboratoire de traitement.

En variante, on pourrait concevoir que le matériel "Postmatic", ou analogue, soit installé chez le photographe, qui recevrait alors des bandes, ou des tronçons de bande, non coupés en feuillets séparés.

## Revendications

1. Procédé de formation et d'utilisation d'une pochette destinée à transmettre un objet, ce procédé comportant les étapes de :
a) établissement chez un imprimeur d'un ensemble constitué de feuilles qui portent chacune des informations relatives à un premier utilisateur et des espaces destinés à recevoir des informations relatives à un parmi plusieurs seconds utilisateurs,
b) envoi dudit ensemble audit premier utilisateur sous une forme permettant son passage dans une imprimante rapide,
c) apposition, dans lesdits espaces, des informations relatives au second utilisateur, cette opération étant faite dans une imprimante rapide chez le premier utilisateur,
d) formation d'une pochette à partir desdites feuilles.
e) envoi de la pochette chez le second utilisateur,
f) mise en place d'un objet dans la pochette par le second utilisateur, et envoi de celle-ci chez le premier utilisateur ou chez un troisième utilisateur.

2. Procédé selon la revendication 1, caractérisé en ce que l'ensemble est constitué sous la forme d'une bande continue et les feuilles constituant la bande sont séparées les unes des autres après passage de la bande dans ladite imprimante rapide.

3. Procédé selon la revendication 1, caractérisé en ce que l'ensemble est constitué de feuilles séparées, empilées.

4. Ensemble destiné à être utilisé pour fabriquer une série de pochettes individuelles conformément au procédé selon la revendication 1, cet ensemble étant constitué de feuilles (2, 2A, 2B) individuelles destinées chacune à être formée en une pochette individuelle, chaque feuille étant limitée par deux bords transversaux (3A, 3B) et un premier et un second bords longitudinaux (4A, 4B),
chacune desdites feuilles (2, 2A, 2B) étant divisée en un premier, un second et un troisième panneaux (5, 6, 7) par deux lignes de pliage transversales, lesdits premier et troisième panneaux étant adjacents à un bord transversal (3A, 3B), et la longueur du second panneau étant plus petite que la somme des longueurs du premier et troisième panneaux, mais plus grande que la longueur d'au moins le troisième panneau,
chaque feuille ayant une face avant qui est imprimée avec de l'information relative à un premier utilisateur et des espaces aptes à recevoir des informations relatives à un parmi plusieurs seconds utilisateurs, ces informations devant être portées par le premier utilisateur, et une face arrière qui porte des motifs de colle réactivable,
le premier panneau (5) de chaque feuille étant pourvu, sur sa face arrière, d'une ligne de colle réactivable (23) courant le long de la ligne de séparation, grâce à laquelle il peut être collé sur la face avant du troisième panneau (7), après que la feuille individuelle a été séparée et pliée,
le second panneau (6) étant pourvu, sur sa face arrière, d'une ligne de colle réactivable (24) courant le long du premier bord longitudinal, grâce à laquelle il peut être collé sur la face arrière desdits premier et troisième panneaux après que la feuille individuelle a été pliée avec la face arrière du second panneau faisant face aux faces arrières desdits premier et troisième panneaux,
caractérisé en ce que ledit ensemble est conditionné pour être expédié au premier utilisateur sous une forme permettant son passage dans une imprimante rapide installée chez le premier utilisateur, pour y recevoir des informations relatives à un second utilisateur.

5. Ensemble selon la revendication 4, caractérisé en ce qu'il est constitué d'une bande continue (1) dans laquelle les feuilles (2, 2A, 2B) sont reliées entre elles par des lignes perforées transversales (3A, 3B) destinées à constituer les bords transversaux des feuilles quand celles-ci sont séparées les unes des autres, les faces avant des différentes feuilles constituant ensemble une face avant de la bande, ladite bande étant aussi prévue avec au moins une rangée de trous d'entraînement disposée le long d'un bord longitudinal de ladite bande,
et en ce que ladite bande est conditionnée pour être expédiée au premier utilisateur sans que les feuilles soient séparées, si bien qu'elle peut recevoir les informations relatives à un second utilisateur par passage dans une imprimante opérant sur une bande continue.

6. Ensemble selon la revendication 4, caractérisé en ce qu'il est constitué de feuilles empilées à plat, si bien que chaque feuille de l'ensemble peut recevoir des informations relatives à un second utilisateur par passage dans une imprimante rapide apte à recevoir des feuilles successives.

7. Ensemble selon l'une des revendications 4 à 6, caractérisé en ce que le premier ou le second panneau (5, 6) de chaque feuille est prévu avec un volet (20) défini par le second bord longitudinal dudit panneau, par deux lignes de séparation transversales (8, 9) coupant ledit bord longitudinal, et par une ligne de pliage longitudinale (22) qui coupe lesdites lignes transversales de perforations.

8. Ensemble selon la revendication 7, dans lequel au moins une desdites lignes de séparation transversales (8, 9) définissant ledit volet coïncide avec une partie de l'une desdites lignes transversales définissant lesdits panneaux.

9. Ensemble selon la revendication 7 ou 8, caractérisé en ce que celui des premier et second panneaux qui ne comporte pas le volet (20) comprend, le long du second bord transversal, au moins un coupon détachable (16, 17) et le volet (20) porte, sur sa face arrière, un motif adhésif (21) apte à venir se fixer sur la face avant de l'autre panneau, après enlèvement du ou des coupons (16, 17).

10. Ensemble selon l'une des revendications 4 à 9, dans lequel le premier et/ou le second panneaux (5, 6) de chaque feuille comportent une fenêtre (18) pourvue d'un transparent conçu pour permettre d'inspecter l'intérieur de la pochette.

## Claims

1. Method of forming and using an envelope intended for sending an object, this method including the steps of:
a) establishing, at a printer's, an assembly consisting of sheets which each bear information relating to a first user and spaces intended to receive information relating to one among several second users,
b) dispatching said assembly to said first user in a form allowing said assembly to pass through a high-speed printer,
c) inserting, in said spaces, information relating to the second user, this operation being performed in a high-speed printer at the first user's premises,
d) forming an envelope from the said sheets,
e) dispatching the envelope to the second user,
f) the second user placing an object in the envelope and dispatching it to the first user or to a third user.

2. Method according to Claim 1, characterized in that the assembly is made up in the form of a continuous strip and the sheets constituting the strip are separated Horn one another after the strip has passed through the said high-speed printer.

3. Method according to Claim 1, characterized in that the assembly consists of separate, stacked sheets.

4. Assembly intended to be used for manufacturing a series of individual envelopes, according to the method of claim 1, this assembly consisting of individual sheets (2, 2A, 2B) each intended to be formed into an individual envelope, each sheet being bounded by two transverse edges (3A, 3B) and a first and second longitudinal edge (4A, 4B),
each of the said sheets (2, 2A, 2B) being divided into a first, a second, and a third panel (5, 6, 7) by two transverse fold lines, the said first and third panels being adjacent to a transverse edge (3A, 3B) and the length of the second panel being shorter than the sum of the lengths of the first and third panels, but longer than the length of at least the third panel,
each sheet having a front face which is printed with information relating to a first user and with spaces capable of receiving information relating to one among several second users, this information having to be marked by the first user, and a rear face which bears patches of reusable glue,
the first panel (5) of each sheet being provided, on its rear face, with a line of reusable glue (23) running along the dividing line, by virtue of which line of glue it can be glued onto the front face of the third panel (7), after the individual sheet has been separated and folded,
the second panel (6) being provided, on its rear face, with a line of reusable glue (24) running along the first longitudinal edge, by virtue of which line of glue it can be glued to the rear face of the said first and third panels after the individual sheet has been folded with the rear face of the second panel facing the rear faces of the said first and third panels,
characterized in that the said assembly is packaged so that it can be sent out to the first user in a form allowing it to be passed through a high-speed printer installed at the first user's premises, in order there to receive information relating to a second user.

5. Assembly according to Claim 4, characterized in that it consists of a continuous strip (1), in which the sheets (2, 2A, 2B) are joined together by transverse perforated lines (3A, 3B) intended to constitute the transverse edges of the sheets when these are separated from one another, the front faces of the various sheets together constituting a front face of the strip, the said strip also being provided with at least one row of driving holes, which is located along a longitudinal edge of the said strip, and in that the said strip is packaged in order to be sent out to the first user without the sheets being separated, so that it can receive the information relating to a second user by being passed through a printer operating on a continuous strip.

6. Assembly according to Claim 4, characterized in that it consists of sheets stacked flat, so that each sheet of the assembly can receive information relating to a second user by passing through a high-speed printer capable of receiving successive sheets.

7. Assembly according to one of Claims 4 to 6, characterized in that the first or second panel (5, 6) of each sheet is provided with a flap (20) defined by the second longitudinal edge of the said panel, by two transverse dividing lines (8, 9) intersecting the said longitudinal edge, and by a longitudinal fold line (22) which intersects the said transverse lines of perforations.

8. Assembly according to Claim 7, in which at least one of the said transverse dividing lines (8, 9) defining the said flap coincides with part of one of the said transverse lines defining the said panels.

9. Assembly according to Claim 7 or 8, characterized in that that one of the first and second panels which does not include the flap (20) comprises, along the second transverse edge, at least one detachable coupon (16, 17) and the flap (20) bears, on its rear face, an adhesive patch (21) capable of being fixed to the front face of the other panel, after the coupon or coupons (16, 17) has or have been removed.

10. Assembly according to one of Claims 4 to 9, in which the first and/or the second panel (5, 6) of each sheet include(s) a window (18) provided with a transparent part designed to allow the inside of the envelope to be inspected.

## Patentansprüche

1. Verfahren zur Herstellung und Verwendung einer zur Beförderung eines Gegenstands bestimmten Tasche, das die folgenden Schritte umfaßt:
a) bei einem Drucker Herstellen einer Anordnung aus Blättern, die jeweils einen ersten Benutzer betreffende Informationen und Plätze für einen unter mehreren zweiten Benutzern betreffende Informationen aufweisen,
b) Senden der Anordnung an den ersten Benutzer in einer Form, die ihr Durchlaufen eines Schnelldruckers gestattet,
c) Versehen der Plätze mit den zweiten Benutzer betreffenden Informationen, wobei dieser Vorgang bei dem ersten Benutzer in einem Schnelldrucker erfolgt,
d) Herstellen einer Tasche aus den Blättern,
e) Senden der Tasche an den zweiten Benutzer,
f) Anordnen eines Gegenstands in die Tasche durch den zweiten Benutzer und Senden der Tasche an den ersten Benutzer oder einen dritten Benutzer.

2. Verfahren nach Anspruch 1, dadurch gekennzeichnet, daß die Anordnung in Form eines Endlosbands hergestellt wird und die das Band bildenden Blätter nach dem Durchlaufen des Bandes durch den Schnelldrucker voneinander getrennt werden.

3. Verfahren nach Anspruch 1, dadurch gekennzeichnet, daß die Anordnung aus getrennten, aufeinandergestapelten Blättern besteht.

4. Anordnung, die zur Herstellung einer Reihe von einzelnen Taschen gemäß dem Verfahren nach Anspruch 1 bestimmt ist, wobei diese Anordnung aus einzelnen Blättern (2, 2A, 2B) besteht, die jeweils zur Herstellung einer einzelnen Tasche bestimmt sind, wobei jedes Blatt von zwei Querrändern (3A, 3B) und einem ersten und einem zweiten Längsrand (4A, 4B) begrenzt ist,
wobei jedes der Blätter (2, 2A, 2B) durch zwei in Querrichtung verlaufende Falzlinien in ein erstes, ein zweites und ein drittes Feld (5, 6, 7) unterteilt ist und wobei das erste und dritte Feld neben einem Querrand (3A, 3B) liegen und die Länge des zweiten Feldes kleiner als die Summe der Längen des ersten und dritten Feldes, aber größer als die Länge von mindestens dem dritten Feld ist,
wobei jedes Blatt eine Vorderseite, die mit einen ersten Benutzer betreffenden Informationen und Plätzen für einen unter mehreren zweiten Benutzern betreffende Informationen bedruckt ist, wobei diese vorderen Informationen von dem ersten Benutzer eingetragen werden, und eine Rückseite, die mit Mustern aus reaktivierbarem Klebstoff versehen ist, aufweist,
wobei das erste Feld (5) jedes Blatts auf seiner Rückseite mit einer Linie (23) aus reaktivierbarem Klebstoff versehen ist, die entlang der Trennungslinie verläuft, dank derer es auf die Vorderseite des dritten Feldes (7) geklebt werden kann, nachdem das Einzelblatt getrennt und gefalten worden ist,
wobei das zweite Feld (6) auf seiner Rückseite mit einer Linie aus reaktivierbarem Klebstoff (24) versehen ist, die entlang des ersten Längsrands verläuft, dank derer es auf die Rückseite des ersten und dritten Feldes geklebt werden kann, nachdem das Einzelblatt so gefaltet worden ist, daß die Rückseite des zweiten Feldes zur Rückseite des ersten und des dritten Feldes weist,
dadurch gekennzeichnet, daß die Anordnung so ausgeführt ist, daß sie an den ersten Benutzer in einer Form geschickt werden kann, die ihren Durchlauf eines beim ersten Benutzer installierten Schnelldruckers gestattet, damit sie dort mit einen zweiten Benutzer betreffenden Informationen versehen werden kann.

5. Anordnung nach Anspruch 4, dadurch gekennzeichnet, daß sie aus einem Endlosband (1) besteht, in dem die Blätter (2, 2A, 2B) durch in Querrichtung verlaufende Perforationslinien (3A, 3B) miteinander verbunden sind, welche die Querrander der Blätter bilden sollen, wenn diese voneinander getrennt sind, wobei die Vorderseiten der verschiedenen Blätter zusammen eine Vorderseite des Bandes bilden, wobei das Band des weiteren mit mindestens einer entlang einem Längsrand des Bandes angeordneten Reihe von Transportlöchern versehen ist,
und dadurch, daß das Band so ausgeführt ist, daß es ohne Trennung der Blätter an den ersten Benutzer geschickt werden kann, so daß es durch Durchlaufen eines mit einem Endlosband betriebenen Druckers die einen zweiten Benutzer betreffenden Informationen erhalten kann.

6. Anordnung nach Anspruch 4, dadurch gekennzeichnet, daß sie aus flach aufeinandergestapelten Blättern besteht, so daß jedes Blatt der Anordnung durch Durchlaufen eines Schnelldruckers, der aufeinanderfolgende Blätter aufnehmen kann, einen zweiten Benutzer betreffende Informationen erhalten kann.

7. Anordnung nach einem der Ansprüche 4 bis 6, dadurch gekennzeichnet, daß das erste oder das zweite Feld (5, 6) jedes Blatts mit einer Klappe (20) versehen ist, die durch den zweiten Längsrand des Feldes, zwei den Längsrand schneidende, in Querrichtung verlaufende Trennungslinien (8, 9) und eine die in Querrichtung verlaufenden Perforationslinien schneidende, in Längsrichtung verlaufende Falzlinie (22) definiert wird.

8. Anordnung nach Anspruch 7, bei der mindestens eine der die Klappe definierenden, in Querrichtung verlaufenden Trennungslinien (8, 9) mit einem Teil einer der die Felder definierenden, in Querrichtung verlaufenden Linien zusammenfällt.

9. Anordnung nach Anspruch 7 oder 8, dadurch gekennzeichnet, daß dasjenige des ersten und des zweiten Feldes, das nicht die Klappe (20) enthält, entlang dem zweiten Querrand mindestens einen abtrennbaren Coupon (16, 17) aufweist und die Klappe (20) auf ihrer Rückseite ein Klebstoffmuster (21) trägt, das nach Entfernen des oder der Coupons (16, 17) auf der Vorderseite des anderen Feldes befestigt werden kann.

10. Anordnung nach einem der Ansprüche 4 bis 9, bei der das erste und/oder zweite Feld (5, 6) jedes Blatts ein Fenster (18) aufweist, das mit einem so ausgelegten durchsichtigen Abschnitt versehen ist, daß das Innere der Tasche eingesehen werden kann.
